# EUROPEAN PATENT APPLICATION

(11) **EP 2 348 194 A2**
(43) Date of publication of application: **27.07.2011**
(21) Application number: 11151498.0
(22) Date of filing: 20.01.2011
(51) Int. Cl.: F01D 11/00

(54) **Sealing arrangement for a gas turbine engine**

(30) Priority: 25.01.2010 GB 1001072
(71) Applicant: Rolls-Royce plc, London SW1E 6AT (GB)
(72) Inventor: Saunders, Duncan, Derby, DE73 5AU (GB)
(74) Representative: Roberts, Nicholas John

(57) **Abstract**

Sealing arrangement between a stator assembly and a rotor (12) of a gas turbine engine, the rotor (12) being rotatable about an engine axis, the stator assembly comprising vanes (22) provided at their radially inner ends with a vane support structure (28) which comprises an annular platform (30) supporting the vanes and a radial flange (32) which extends radially inwardly from the platform, the sealing arrangement comprising an array of leaves (36) which extend inwardly from the radially inner periphery of the flange (32), towards a circumferential sealing surface (13) of the rotor (12).

## Description

The present invention relates to a sealing arrangement between a stator assembly and a rotor of a gas turbine engine, in particular, a sealing arrangement for sealing between compressor stator vanes and a compressor drum.

Gas turbine engines include an axial flow compressor comprising a rotor in the form of a compressor drum located within a substantially annular casing. The compressor drum carries axially spaced sets of compressor blades, each set of compressor blades comprising a plurality of radially extending and circumferentially spaced rotor blades that rotate about the engine axis. A set of non-rotating stator vanes is positioned in each space between adjacent sets of compressor blades. Each set of stator vanes comprises a plurality of circumferentially spaced vanes that radially extend from the annular casing towards the compressor drum. It is necessary to seal between the radially inward end of each stator vane and the compressor drum in order to prevent high-pressure air from circulating beneath the vanes.

In a known arrangement, for example as disclosed in GB 2426301, axially spaced and radially extending fins are provided on the compressor drum between adjacent sets of compressor blades. The stator vanes are provided with an abradable liner, which the fins rub against in use, thereby providing a seal between the stator vanes and the compressor drum. Whilst this arrangement is satisfactory, it does not allow for large relative radial movement between the compressor drum and the stator vanes and does not allow for differential thermal expansion of the components, whilst maintaining a good seal. For example, in an extreme event, the compressor drum rotates eccentrically with respect to the stator vanes, and the fins create a deep groove in the abradable liner. Subsequently, under normal running, the deep groove can provide a flow path beneath the vanes. This is undesirable.

Further, machining the fins on the compressor drum can be complicated and time consuming and also the fins can serve as crack initiation points on the compressor drum. It is also necessary to replace the abradable liner periodically which results in an increased cost.

It is therefore desirable to provide a sealing arrangement between stator vanes and a rotor which provides a good seal at all conditions.

According to a first aspect of the present invention there is provided a sealing arrangement between a stator assembly and a rotor of a gas turbine engine, the rotor being rotatable about an engine axis, the stator assembly comprising vanes provided at their radially inner ends with a vane support structure which comprises an annular platform supporting the vanes and a radial flange which extends radially inwardly from the platform, the sealing arrangement comprising an array of leaves which extend inwardly from the radially inner periphery of the flange, towards a circumferential sealing surface of the rotor.

The leaves may be directly attached to the radial flange. Alternatively, the leaves may be attached to a backing ring which is directly attached to the radial flange. A further possibility is for the leaves to be formed on the radial flange by a material removal operation such as machining or chemical etching, which removes the material between the leaves.

The annular platform may comprise a plurality of circumferentially arranged openings, each opening having the end of a stator vane located within it. The end of each stator vane may be attached to the annular platform by upset forging.

In a preferred arrangement the annular vane support structure comprises a plurality of circumferentially extending segments. Each segment may comprise a projection that cooperates with an adjacent segment to restrict relative axial movement between adjacent segments.

The material of the rotor sealing surface may be hardened. For example, a hard coating may be applied to the rotor to form the sealing surface.

The rotor may be a compressor drum or disc and the vanes may be compressor vanes.

The invention also concerns a gas turbine engine comprising a sealing arrangement in accordance with any statement herein.

The invention may comprise any combination of the features and/or limitations referred to herein, except combinations of such features as are mutually exclusive.

Embodiments of the present invention will now be described, by way of example only, with reference to the accompanying drawings, in which:
Figure 1 schematically shows a sectional view of part of a compressor section of a gas turbine engine;
Figure 2 schematically shows an enlarged view of a stator vane arrangement of Figure 1;
Figure 3 schematically shows the view A of Figure 2;
Figure 4 schematically shows a view of a stator vane, vane support and leaf seal;
Figure 5 schematically shows the view B of Figure 4; and
Figure 6 schematically shows the view C of Figure 4.

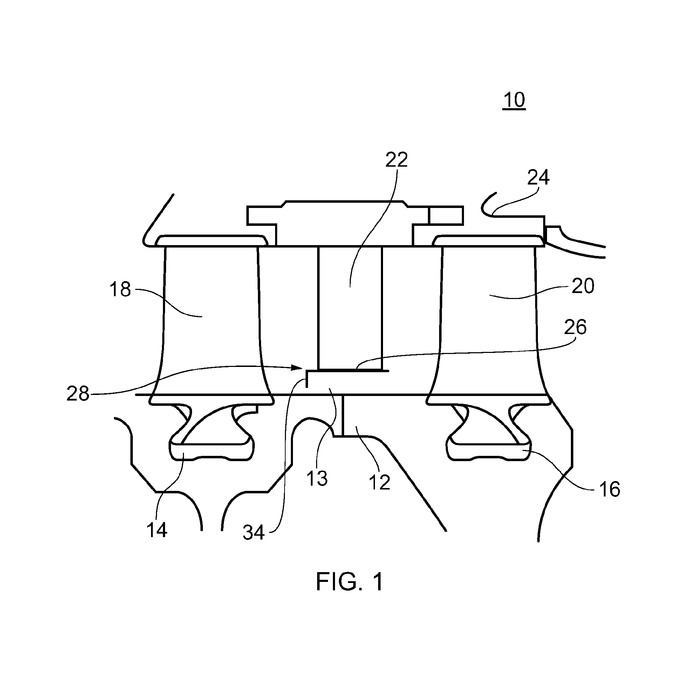

Figure 1 shows a compressor section 10 of a gas turbine engine. The compressor section 10 comprises a rotor in the form of a compressor drum 12 having a plurality of axially spaced blade slots 14, 16. Compressor blades 18, 20, of successive stages of the compressor, are located in the blade slots 14, 16 and the blades 18, 20 are circumferentially arranged around the drum. Although in this embodiment the blades 18, 20 are located in blade slots 14, 16, they may be integrally formed with the compressor drum or with a compressor disc or indeed located in other known blade securing arrangements such as, for example, circumferentially extending slots.

The compressor drum 12 is located within an outer casing 24 of the compressor. A plurality of compressor stator vanes 22 are attached to the outer casing 24 and are circumferentially arranged and extend towards the compressor drum 12. The stator vanes 22 are situated between the axially spaced sets of blades 18, 20. The radial inner ends 26 of the stator vanes 22 are attached to a vane support structure 28 which is annular and extends around the compressor drum 12. A leaf seal 34 is disposed between the vane support 28 and the outer surface 13 of the compressor drum and provides a seal therebetween. This leaf seal 34 restricts the flow of high-pressure fluid underneath the radially inward ends 26 of the stator vanes 22.

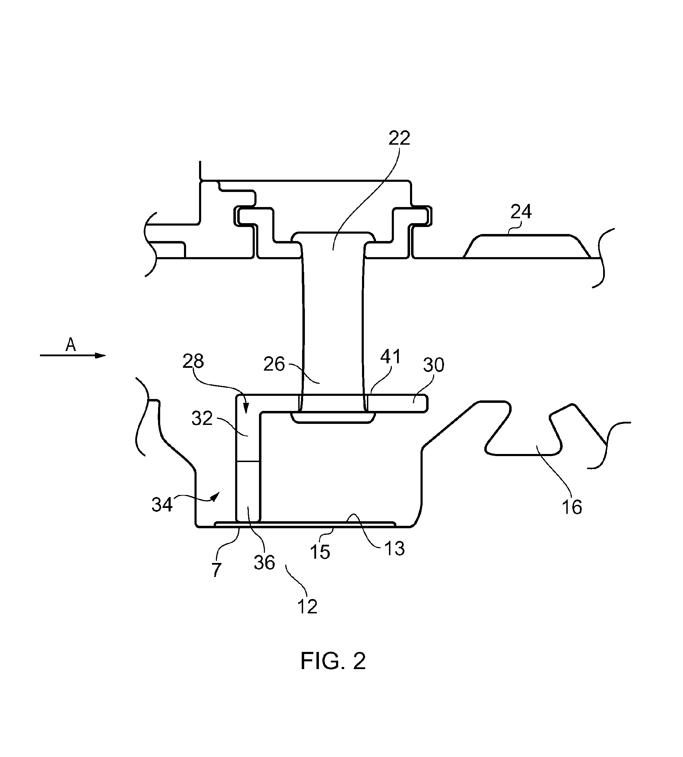

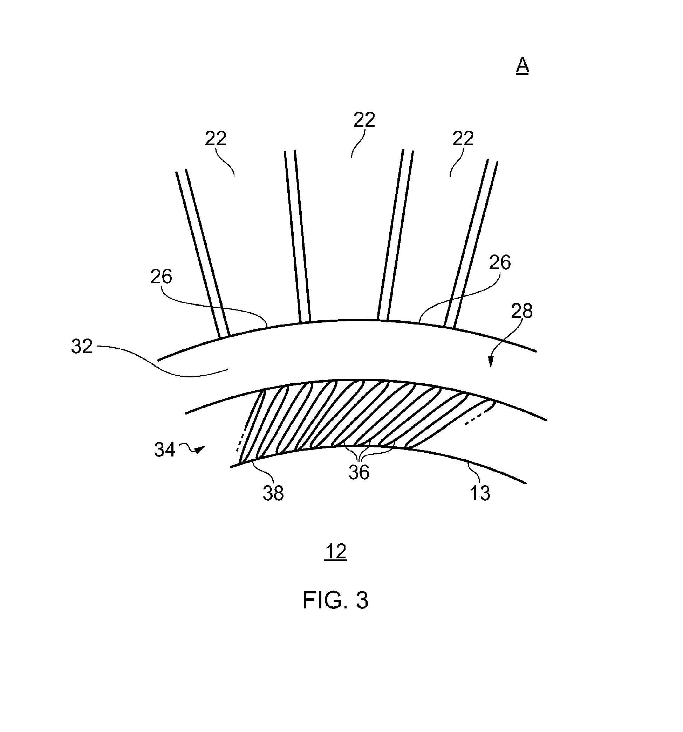

With reference to Figures 2 and 3, the vane support 28 has a substantially L-shaped cross-section which comprises an annular axially extending platform 30 and a radially extending flange 32 that extends from one axial end of the platform 30 towards the compressor drum 12. The leaf seal 34 comprises a plurality of thin metal leaves 36 (or leaf seal elements) circumferentially arranged in an annular pack. In this embodiment, each leaf 36 is welded at its radially outer edge directly to the inner periphery of the radially extending flange 32 of the vane support 28. The plurality of leaves 36 extend towards the compressor drum 12 and a free end (the radially inward end) of each leaf 36 contacts an outer sealing surface 13 of the compressor drum 12. The leaves 34 extend at an angle to the true radius and are resiliently deformable such that they can bend, or flex, along their length. For example, the leaves may be inclined in the operative direction of movement of the sealing surface 13, in the radially inwards direction. The sealing surface 13 of the compressor drum 12 is constituted by a hard coating 15 in order to prevent the leaves 36 from abrading the surface during use.

In other embodiments, the leaves 36 may be integrally formed with the flange 32 of the vane support structure 28 by either mechanical machining or chemical etching. Alternatively, the leaf seal 34 may be formed entirely separately from the vane support structure 28 by providing a backing ring (not shown) with a plurality of leaves 36 extending from it. The backing ring may then be attached to the radially extending flange 32 of the vane support structure 28 by welding, for example. The leaf seal 34 may be formed as a continuous annular element, or more preferably, may be formed from a plurality of circumferentially extending leaf seal segments forming a continuous annulus.

In this embodiment the vane support structure 28 is formed from a plurality of circumferentially extending segments. The stator vanes 22 are individually cast and are attached at a radially outward end to the outer casing 24 and at a radially inner end 26 to the axially extending platform 30 of the vane support structure 28. The axially extending platform 30 is provided with an opening 41 for each stator vane 22. The radially inward end 26 of each stator vane 22 is located in a respective one of the openings 41 and is attached to the axially extending platform 30 by hot upset forging. As will be readily apparent to one skilled in the art, the stator vanes 22 may be attached to the vane support 28 by any other suitable method.

Although it has been described that the vane support structure 28 is formed from a plurality of circumferentially extending segments, in other embodiments the vane support structure 28 may be a continuous annular element. If the vane support structure 28 is formed from a plurality of circumferentially extending segments, the segments may be attached to one another by mechanical interlock, by welding, or by any other suitable method.

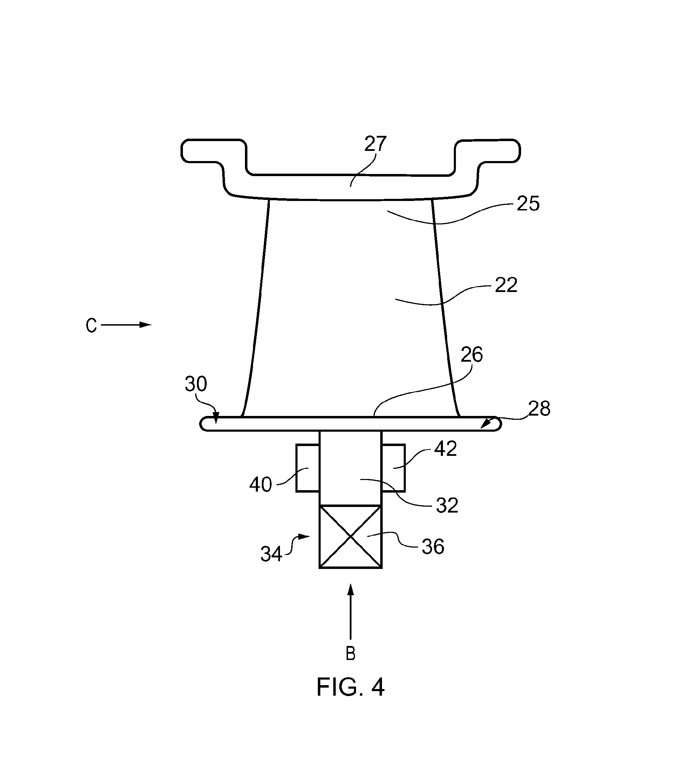

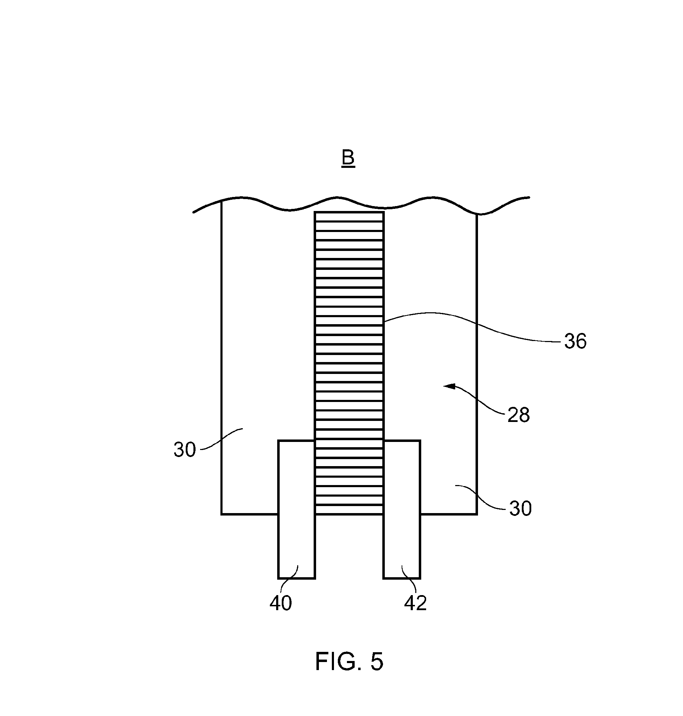

Figures 4, 5 and 6 show a second embodiment of the present invention that is similar to the embodiment of Figures 1-3. The radially inward ends 26 of a plurality of stator vanes 22 are attached to a vane support structure 28. The radially outer end 25 of each stator vane 22 is provided with an attachment portion 27 for attaching the stator vane 22 to the outer casing 24 of the compressor. The vane support structure 28 comprises an annular axially extending platform 30, to which the radially inward end 26 of each stator vane 22 is attached, and a radially extending flange 32. A leaf seal 34 is attached to the inner periphery of the radially extending portion 32. As in the first embodiment, the leaf seal 34 comprises a plurality of leaves 36 welded at a first end to the radially extending flange 32. The leaves 36 extend at an angle to the true radius and are resiliently deformable such that they can bend, or flex, along their length. A free end (the radially inward end) of each leaf 36 is in contact with the sealing surface 13 of the compressor drum 12 in use.

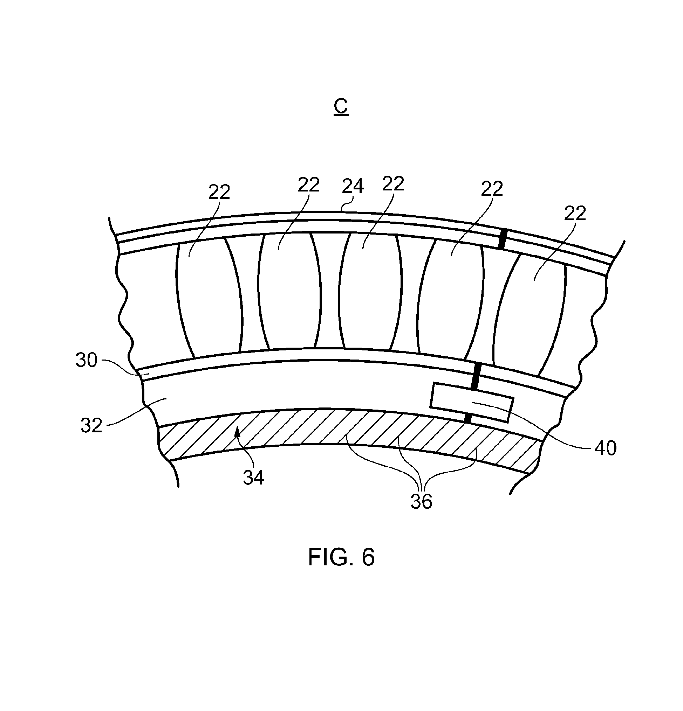

The vane support structure 28 is a complete annulus that is formed from a plurality of circumferentially extending segments, each having a plurality of stator vanes 22 attached thereto. The end of the radially extending flange 32 of each vane support structure 28 segment is provided with two circumferentially extending projections located axially one on each side of the radially extending portion 32. As shown in Figure 6, the projections 40, 42 extend each side of the radially extending flange 32 of an adjacent segment. This helps to restrict relative axial movement between adjacent segments and seals against axial leakage between adjacent vane radially extending flanges 32.

In use, the compressor drum 12 and compressor blades 18, 20 rotate with respect to the stator vanes 22, vane support 28 and leaf seal 34. The free ends of the leaves 36 are in contact with the sealing surface 13 of the compressor drum 12. This restricts the flow of high-pressure fluid under the radially inward ends of the stator vanes 22 and therefore provides a good seal across each stage of the compressor. This in turn improves the efficiency of the gas turbine engine. The leaves 34 are in constant contact with the sealing surface 13 of the compressor drum 12. This ensures sealing at both transient and steady-state conditions. If there is radial displacement, or differential expansion under thermal or centrifugal effects, between the compressor drum 12 and the compressor stator vanes 22, then the leaf elements 36 can bend, or flex, along their length such that they are always in contact with the sealing surface 13 of the compressor drum 12.

The vane support structure 28 and leaf seal 34 can be manufactured relatively easily and inexpensively when compared to prior art sealing arrangements that rely on fins provided on the compressor drum that abrade a liner provided on the stator vanes.

Although it has been described that the arrangement is for sealing between compressor stator vanes and a rotatable compressor drum, as will be readily apparent to one skilled in the art, the invention may be used to seal between any type of stator vane and rotor arrangement. Examples include, but are not limited to, fans and turbines.

## Claims

1. A sealing arrangement between a stator assembly (26) and a rotor (12) of a gas turbine engine, the rotor being rotatable about an engine axis, the stator assembly comprising vanes (26) provided at their radially inner ends with a vane support structure (28) which comprises an annular platform (30) supporting the vanes and a radial flange (32) which extends radially inwardly from the platform, the sealing arrangement comprising an array of leaves (36) which extend inwardly from the radially inner periphery of the flange, towards a circumferential sealing surface of the rotor.

2. A sealing arrangement according to claim 1, wherein the leaves (36) are directly attached to the radial flange (32).

3. A sealing arrangement according to claim 1, wherein the leaves are attached to a backing ring which is directly attached to the radial flange.

4. A sealing arrangement according to claim 1, wherein the leaves are formed on the radial flange (32) by a material removal operation.

5. A sealing arrangement according to any preceding claim, wherein the annular platform comprises a plurality of circumferentially arranged openings (41), each opening having the end of a stator vane located within it.

6. A sealing arrangement according to claim 5, wherein the end of each stator vane is attached to the annular platform by upset forging.

7. A sealing arrangement according to any preceding claim, wherein the annular vane support structure comprises a plurality of circumferentially extending segments.

8. A sealing arrangement according to claim 7, each segment comprises a projection (40, 42) that cooperates with an adjacent segment to restrict relative axial movement between adjacent segments.

9. A sealing arrangement according to claim 8, wherein the projection is provided on the radial flange (32)

10. A sealing arrangement according to any preceding claim, wherein the sealing surface is constituted by a hard coating on the rotor.

11. A sealing arrangement according to any preceding claim, wherein the rotor is a compressor drum or disc and the vanes are compressor vanes.

12. A gas turbine engine comprising a sealing arrangement in accordance with any of claims 1-11.
